# EUROPEAN PATENT SPECIFICATION

(11) **EP 3 540 356 B1**
(45) Date of publication and mention of the grant of the patent: **17.11.2021**
(21) Application number: 19162139.0
(22) Date of filing: 12.03.2019
(51) Int. Cl.: F28F 9/02, F16L 15/00, F28D 21/00, F28D 1/053, B21C 37/29, F28F 9/26, F28F 9/18, F24D 19/00, F16L 13/02, F16L 5/10, F16L 1/00, F16L 41/08

(54) **RADIANT BODY**
STRAHLUNGSKÖRPER
CORPS RAYONNANT

(30) Priority: 14.03.2018 IT 201800003546
(43) Date of publication of application: 18.09.2019
(73) Proprietor: W-A Progettazioni S.r.l., 40054 Loc. Cento - Budrio (Bologna) (IT)
(72) Inventor: LOLLI, Valter, 40033 Casalecchio di Reno (Bologna) (IT)
(74) Representative: Milli, Simone

(56) References cited:
- DE-A1- 2 434 482
- DE-A1- 3 113 207
- GB-A- 1 451 869
- US-A- 3 064 707
- US-A- 5 056 704

## Description

This invention relates to a radiant body.

A radiant body is a known apparatus which, positioned inside a confined space or inside room, is designed to increase or maintain a predetermined temperature in the room. Radiant bodies according to the preamble of claim 1 are known from GB 1 451 869 A and DE 24 34 482 A1.

More specifically, the radiant bodies comprise, usually, a plurality of modules side by side (the number depending on the total size of the radiant body and the desired operating capacity) and connected to each other in a sealed fashion.

A heat carrier fluid, heated to a predetermined temperature by a thermal energy source, such as, for example, a boiler, flows inside the modules of the radiant body.

The radiant body therefore forms part of a water circuit in which the heat carrier fluid circulates.

The current hydraulic circuits comprise a thermal energy source, such as, for example a boiler, which heats the heat carrier fluid, which is then made to circulate in the radiant body.

In the majority of the applications, the heat carrier fluid is water and the circulation of the heat carrier fluid is actuated thanks to the use of a pump. As already mentioned, in the technical field in question, there are prior art radiant bodies consisting of several modules, coupled with each other in such a way as to provide a suitable heat exchange surface as a function of the volume of the room to be heated.

More specifically, the modules can be connected permanently, by welding, or coupled to each other during assembly through a connection element and a plurality of seals. In the latter case, the connecting elements are tubular conduits which also act as conduits for supplying and discharging the heat carrier fluid.

A type of radiant body consists of two heads, a lower and an upper, and a plurality of conduits which connect the two heads.

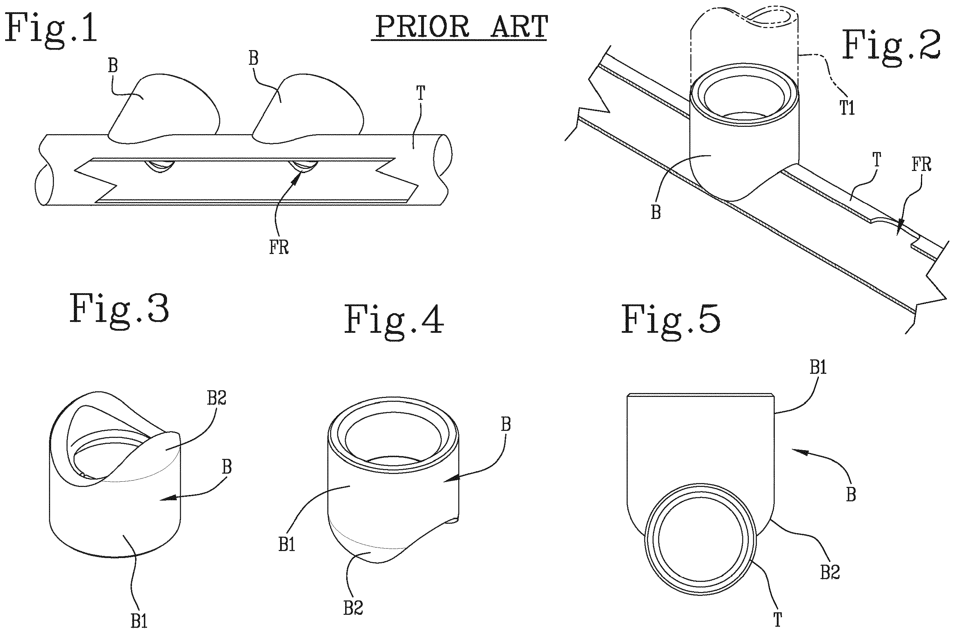

In a prior art solution (see Figures 1 to 5), of particular interest in this specification, the radiant body comprises a first head and a second head, each composed of a main tubular conduit T with longitudinal axis of extension and positioned parallel to each other.

Each tubular conduit T is provided with a plurality of radial holes FR positioned at preset distances on which is associated a corresponding connecting sleeve or bush B for closing the hole FR.

Each bushing joint B, with a tubular cross-section, is provided with an inner thread to allow the joining of secondary tubular conduits T1 which join the main tubular conduits T for the passage of the heating fluid.

Each secondary tubular conduit T1 has the two threaded ends and a seal is interposed between the ends and the bushing joint B.

As shown in Figures 3 to 5, each bushing B is composed of a first cylindrical portion B1 and a second portion B2 shaped to match and rest on the hemispherical surface of the main tubular conduit T and wrap around the area surrounding the hole FR.

In particular, the second portion B2 shaped to match is formed by a curved end central recess which forms two outer flaps for the resting on the outer surface of the main tubular conduit T.

Once the second portion is rested on the main tubular conduit T, the outer perimeter area is welded on the outer surface of the main tubular conduit T to guarantee the joining between the bushing B and the main tubular conduits.

However, this type of solution has several drawbacks.

The first drawback is due to the high cost and time necessary for making the bushing.

Each bushing must be made by mechanical processing on machines for the removal of material with a good precision, so the unit cost of each bushing is affected by this factor.

A second drawback is due to the difficult positioning and centring of the bushing relative to the hole of the tubular conduit which determines a slowing down in the assembly step, in particular in the presence of a large number of bushes to be applied. This slowness in the assembly therefore results in both a slowing down of production and an increase in the overall costs of the radiant body.

A third drawback is due to the reduced guarantee of sealing over time of the weld on the perimeter of the bushing and the surface of the tubular conduit due to the effect of the step with a thickness defined by the second portion of the bushing.

A further drawback is due to the expense of forming precision holes on the tubular conduits which, in fact, has an impact, together with the high cost of the bushes, on the total cost of the radiant body.

The aim of the invention is to provide a a radiant body.

In particular, the aim of the invention is to provide a radiant body which is able to guarantee a fast and rapid assembly of each tubular body forming the radiant body.

A further aim of the invention is to provide a radiant body which is able to guarantee a reliability over time of the joints on the tubular bodies, reducing the unit costs both of the bushing and of the radiant body as a whole.

The aims are fully achieved by the radiant body according to the invention, as characterised in the appended claims.

These and other features will become more apparent from the following detailed description of a preferred embodiment, illustrated by way of nonlimiting example in the accompanying drawings, in which:
- Figure 1 illustrates a perspective view from below, with some parts cut away, of a part of a radiant body of known type;
- Figure 2 illustrates a perspective view from above, with some parts in cross section, of the part of the radiant body of known type of Figure 1;
- Figures 3 and 4 illustrate a bushing joint of known type and applied on the part of the radiant body of known type of Figures 1 and 2; The views are, respectively, perspective views from below and above;
- Figure 5 illustrates a front view of the part of the radiant body of known type of Figures 1 and 2;
- Figure 6 illustrates an exploded perspective view of a part of a radiant body according to the invention;
- Figure 7 illustrates an assembled perspective view of a part of a radiant body according to the invention;
- Figure 8 illustrates a perspective view from below, with some parts in cross section, of the part of the radiant body of Figures 6 and 7;
- Figures 9 and 10 illustrate, respectively, a side view in cross section and a top plan view of the part of the radiant body of Figures 6 to 8;
- Figure 11 illustrates a perspective view from below of the bushing joint of the radiant body according to the invention.

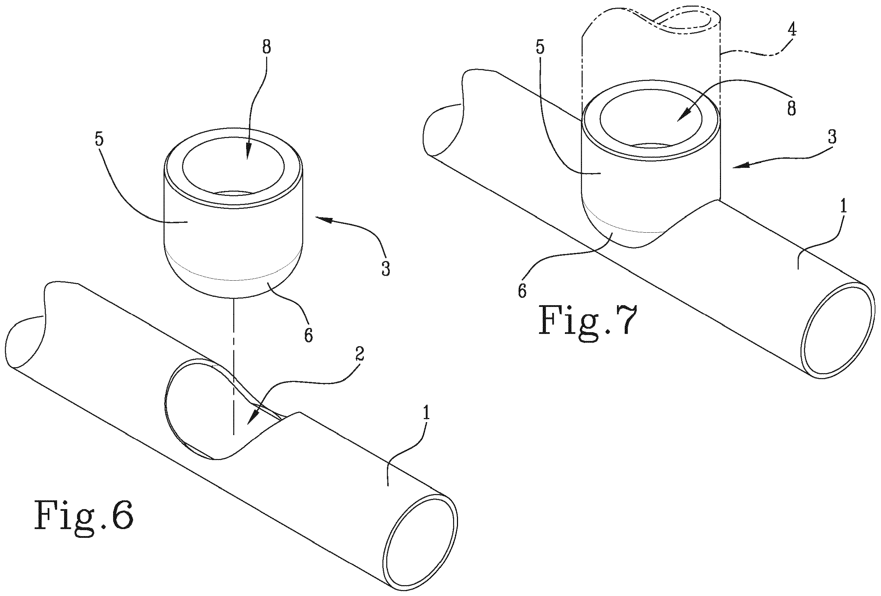

As illustrated in the accompanying drawings, in particular Figures 6 and 7, a bushing joint, labelled 3, is used for the formation of radiant bodies, according to the invention, designed to increase or maintain a predetermined temperature in an environment by the passage of hot fluid. The accompanying drawings illustrate only a part of the radiant body, since the parts making up the radiant body are specular.

The radiant body comprises a first head and a second head, each composed of a main tubular conduit 1 (here, as stated, only one of the conduits is visible) having a corresponding longitudinal axis X of extension. The two main tubular conduits 1 are positioned parallel to each other.

Each main tubular conduit 1 has at least one radial hole or opening 2.

The radiant body comprises a bushing 3 for joining each main tubular conduit 1.

Each bushing 3 is associated with the corresponding main tubular conduit 1 at the radial opening 2.

Each bushing 3 having an extension axis placed transversally to the longitudinal axis X of extension of the main tubular conduit (Figure 6).

The radiant body also comprises a secondary tubular conduit 4 (illustrated with a dashed line) associated, in a sealed fashion and at its ends, with the corresponding bushing joints 3 so as to be positioned transversely with respect to the main tubular conduits 1 for the passage, in both directions, of a fluid between the two main tubular conduits 1.

The accompanying drawings illustrate a single main tubular conduit 1, a radial hole or opening 2, a single bushing joint 3 and a single secondary tubular conduit 4, since the upper parts of the radiant body are equal and the number of openings (and thus also the bushings used and relative secondary conduits) are obtained and positioned at regular intervals on each main tubular conduit 1 in a variable number as a function of the extension of the radiant body.

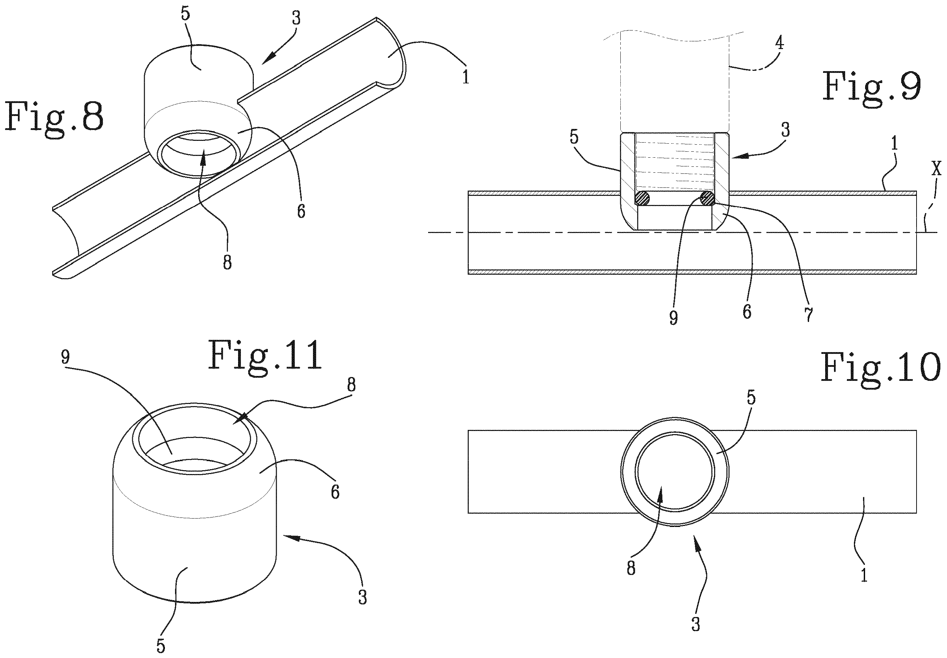

As illustrated (see Figures 6 to 11), each bushing joint 3 has a first portion 5, external, having a cylindrical shape and a second portion 6, internal, having a partly semi-spherical shape.

The second portion 6 is configured for housing, at least partly, inside the corresponding main tubular conduit 1 through the corresponding opening 2 in such a way as to form also a part of the outer surface of the main tubular conduit 1.

In other words, the bush is applied inside the radial opening and forms a part of the outer surface of the main tubular conduit.

This geometrical architecture achieves a greater seal over time and a reduction both in the time for forming the radiant body and the overall final costs.

Preferably, the second portion 6 of each bushing 3 has a first hemispherical stretch interrupted by a ring-shaped cut configured for interrupting the spherical shape of the second portion 6 and defining the free end forming the lower opening of the bushing 3 positioned, in use, completely inside the corresponding main tubular conduit 1.

Again preferably, each main tubular conduit 1 has an opening 2 having the shape of a cradle.

In light of this, the partly hemispherical portion 6 is coupled in an interlocking fashion in such a way as to define the external surface of the main tubular conduit 1 at least in the curved lateral stretches of the cradle-shaped opening 2.

It should be noted that each bushing joint 3 has an annular inner seat 7 defined on its inner edge in a zone constituting the margin of separation between the cylindrical portion 5 and the partly hemispherical portion 6, and defining also a part of the annular edge of a relative internal through hole 8.

In light of this, a seal gasket 9 is positioned, in use, in the annular seat 7. Each bushing joint 3 has the cylindrical portion 5 equipped with an inner thread for coupling with the corresponding secondary tubular conduit 4. Preferably, the partly hemispherical portion 6 is housed, in use, in the corresponding main tubular conduit 1 for at least a third of the inside diameter of the main tubular conduit 1.

In other words, the partly hemispherical portion 6 is inserted inside the main tubular conduit 1 and penetrates for at least a third of the diameter, preferably at least half of the diameter of the main tubular conduit.

It should be noted that the edge of the radial opening 2 and the bushing 3 are associated stably by means of an outer perimeter welding.

This type of welding is more secure and precise thanks to the outer undercut formed by the edge of the opening and by the portion of bushing housed therein.

The invention provides a radiant body comprising at least:
- a first head and a second head, each composed of a main tubular conduit 1 having a corresponding axis X of longitudinal extension; the main tubular conduits 1 are positioned parallel to each other; each main tubular conduit 1 has at least one radial hole or opening 2;
- a bushing joint 3 for each main tubular conduit 1; each bushing 3 is associated with the corresponding main tubular conduit 1 at the radial opening 2;
- a secondary tubular conduit 4 associated, in a sealed fashion and at its ends, with the corresponding bushing joints 3 so as to be positioned transversely with respect to the main tubular conduits 1 for the passage, in both directions, of a fluid between the two main tubular conduits 1.

The radiant body comprises each bushing joint 3 having the features described above.

The present aims are achieved with a bushing joint structured in this way. The hemispherical portion makes it possible to house in a precise, fast and secure manner the bushing joint on the tubular conduit without the need for mutual coaxial control operations.

Each opening on the tubular conduit is obtained in a practical and fast manner and with reduced costs compared to traditional machining operations.

The association by welding, with the hemispherical portion of the bushing which defines a part of the outer surface of the main tubular conduit guarantees a high level of security and duration over time.

## Claims

1. A radiant body comprising at least:
- a first head and a second head, each composed of a main tubular conduit (1) having a corresponding axis (X) of longitudinal extension; the main tubular conduits (1) being positioned parallel to each other; each main tubular conduit (1) having at least one radial hole or opening (2);
- a bushing joint (3) for each main tubular conduit (1); each bushing (3) being associated with the corresponding main tubular conduit (1) at the radial opening (2); each bushing (3) having an extension axis placed transversally to the longitudinal axis (X) of extension of the main tubular conduit (1);
- a secondary tubular conduit (4) associated, in a sealed fashion and at its ends, with the corresponding bushing joints (3) so as to be positioned transversely with respect to the main tubular conduits (1) for the passage, in both directions, of a fluid between the two main tubular conduits (1),
**characterised in that** each bushing joint (3) has a first portion (5), external, having a cylindrical shape and a second portion (6), internal, having a partly semi-spherical shape; and the second portion (6) being configured for housing, at least partly, inside the corresponding main tubular conduit (1) through the corresponding opening (2) in such a way as to form also a part of the outer surface of the main tubular conduit (1).

2. The radiant body according to claim 1, wherein the second portion (6) of each bushing (3) has a first hemispherical stretch interrupted by a ring-shaped cut configured for interrupting the spherical shape of the second portion (6) and defining the free end forming the lower opening of the bushing (3) positioned, in use, completely inside the corresponding main tubular conduit (1).

3. The radiant body according to claim 1 or 2, wherein each main tubular conduit (1) has an opening (2) having the shape of a cradle wherein the partly hemispherical portion (6) is coupled in an interlocking fashion in such a way as to define the external surface of the main tubular conduit (1) at least in the curved lateral stretches of the cradle-shaped opening (2).

4. The radiant body according to any one of the preceding claims, wherein each bushing joint (3) has an annular inner seat (7) defined on its inner edge in a zone constituting the margin of separation between the cylindrical portion (5) and the partly hemispherical portion (6), and defining also a part of the annular edge of a relative internal through hole (8); the annular seat (7) housing, in use, a seal gasket (9).

5. The radiant body according to any one of the preceding claims, wherein each bushing joint (3) has the cylindrical portion (5) equipped with an inner thread for coupling with the corresponding secondary tubular conduit (4).

6. The radiant body according to any one of the preceding claims, wherein the partly hemispherical portion (6) is housed, in use, in the corresponding main tubular conduit (1) for at least a third of the inside diameter of the main tubular conduit (1).

## Patentansprüche

1. Strahlungskörper, umfassend mindestens:
- einen ersten Kopf und einen zweiten Kopf, die jeweils aus einer rohrförmigen Hauptleitung (1) mit einer entsprechenden Längserstreckungsachse (X) bestehen; wobei die rohrförmigen Hauptleitungen (1) parallel zueinander positioniert sind; wobei eine jede rohrförmige Hauptleitung (1) mindestens ein radiales Loch oder eine radiale Öffnung (2) aufweist;
- ein Buchsengelenk (3) für eine jede rohrförmige Hauptleitung (1); wobei eine jede Buchse (3) mit der entsprechenden rohrförmigen Hauptleitung (1) an der radialen Öffnung (2) assoziiert ist; wobei eine jede Buchse (3) eine Erstreckungsachse aufweist, die quer zur Längsachse (X) der Erstreckung der rohrförmigen Hauptleitung (1) angeordnet ist;
- eine sekundäre rohrförmige Leitung (4), die dichtend und an ihren Enden mit den entsprechenden Buchsengelenken (3) assoziiert ist, um quer zu den rohrförmigen Hauptleitungen (1) für den Durchgang in beiden Richtungen eines Fluids zwischen den beiden rohrförmigen Hauptleitungen (1) positioniert zu sein, **dadurch gekennzeichnet, dass** ein jedes Buchsengelenk (3) einen ersten Abschnitt (5), außen, mit einer zylindrischen Form und einen zweiten Abschnitt (6), innen, mit einer teilweise halbkugelförmigen Form aufweist; und wobei der zweite Abschnitt (6) so ausgebildet ist, dass er zumindest teilweise im Inneren der entsprechenden rohrförmigen Hauptleitung (1) durch die entsprechende Öffnung (2) untergebracht wird, um auch einen Teil der Außenfläche der rohrförmigen Hauptleitung (1) zu bilden.

2. Strahlungskörper nach Anspruch 1, wobei der zweite Abschnitt (6) einer jeden Buchse (3) ein erstes halbkugelförmiges Teilstück aufweist, das durch einen ringförmigen Schnitt unterbrochen wird, der ausgebildet ist, um die Kugelform des zweiten Abschnitts (6) zu unterbrechen und das freie Ende, das die untere Öffnung der Buchse (3) bildet und im Gebrauch vollständig innerhalb der entsprechenden rohrförmigen Hauptleitung (1) positioniert ist, zu definieren.

3. Strahlungskörper nach Anspruch 1 oder 2, wobei eine jede rohrförmige Hauptleitung (1) eine Öffnung (2) mit der Form einer Wiege aufweist, wobei der teilweise halbkugelförmige Abschnitt (6) ineinandergreifend gekoppelt ist, sodass die Außenfläche der rohrförmigen Hauptleitung (1) zumindest in den gekrümmten seitlichen Teilstücken der wiegenförmigen Öffnung (2) definiert wird.

4. Strahlungskörper nach einem der vorhergehenden Ansprüche, wobei ein jedes Buchsengelenk (3) einen ringförmigen Innensitz (7) aufweist, der an seiner Innenkante in einer Zone definiert ist, die den Trennungsrand zwischen dem zylindrischen Abschnitt (5) und dem teilweise halbkugelförmigen Abschnitt (6) bildet, der auch einen Teil der ringförmigen Kante eines relativen inneren Durchgangslochs (8) definiert; wobei der ringförmige Sitz (7) im Gebrauch eine Dichtung (9) unterbringt.

5. Strahlungskörper nach einem der vorhergehenden Ansprüche, wobei ein jedes Buchsengelenk (3) den zylindrischen Abschnitt (5) aufweist, der mit einem Innengewinde zum Koppeln mit der entsprechenden sekundären rohrförmigen Leitung (4) ausgestattet ist.

6. Strahlungskörper nach einem der vorhergehenden Ansprüche, wobei der teilweise halbkugelförmige Abschnitt (6) im Gebrauch in der entsprechenden rohrförmigen Hauptleitung (1) für mindestens ein Drittel des Innendurchmessers der rohrförmigen Hauptleitung (1) untergebracht ist.

## Revendications

1. Corps rayonnant comprenant au moins :
- une première tête et une seconde tête, chacune composée d'un conduit tubulaire principal (1) ayant un axe correspondant (X) d'extension longitudinale ; les conduits tubulaires principaux (1) étant positionnés parallèlement l'un à l'autre ; chaque conduit tubulaire principal (1) comportant au moins un trou ou une ouverture radiale (2) ;
- un joint de bague (3) pour chaque conduit tubulaire principal (1) ; chaque bague (3) étant associée au conduit tubulaire principal (1) correspondant en correspondance de l'ouverture radiale (2) ; chaque bague (3) ayant un axe d'extension placé transversalement à l'axe longitudinal (X) d'extension du conduit tubulaire principal (1) ;
- un conduit tubulaire secondaire (4) associé, de façon étanche et à ses extrémités, aux joints de bague (3) correspondants de façon à être positionné transversalement par rapport aux conduits tubulaires principaux (1) pour le passage, dans les deux sens, d'un fluide entre les deux conduits tubulaires principaux (1), **caractérisé en ce que** chaque joint de bague (3) comporte une première partie (5), externe, de forme cylindrique et une seconde partie (6), interne, de forme partiellement semi-sphérique ; et la seconde partie (6) étant configurée pour se loger, au moins partiellement, à l'intérieur du conduit tubulaire principal (1) correspondant à travers l'ouverture correspondante (2) de manière à former également une partie de la surface extérieure du conduit tubulaire principal (1).

2. Corps rayonnant selon la revendication 1, dans lequel la seconde partie (6) de chaque bague (3) comporte une première portion hémisphérique interrompue par une coupe annulaire configurée pour interrompre la forme sphérique de la seconde partie (6) et définissant l'extrémité libre formant l'ouverture inférieure de la bague (3) positionnée, lors de l'utilisation, complètement à l'intérieur du conduit tubulaire principal (1) correspondant.

3. Corps rayonnant selon la revendication 1 ou 2, dans lequel chaque conduit tubulaire principal (1) comporte une ouverture (2) ayant la forme d'un berceau dans lequel la partie partiellement hémisphérique (6) est couplée par emboîtement de manière à définir la surface externe du conduit tubulaire principal (1) au moins dans les portions latérales incurvées de l'ouverture en forme de berceau (2).

4. Corps rayonnant selon l'une quelconque des revendications précédentes, dans lequel chaque joint de bague (3) comporte un siège interne annulaire (7) défini sur son bord interne dans une zone constituant la marge de séparation entre la partie cylindrique (5) et la partie partiellement hémisphérique (6), et définissant également une partie du bord annulaire d'un trou traversant interne (8) relatif ; le siège annulaire (7) logeant, lors de l'utilisation, un joint d'étanchéité (9).

5. Corps rayonnant selon l'une quelconque des revendications précédentes, dans lequel chaque joint de bague (3) comporte la partie cylindrique (5) équipée d'un filetage interne pour le couplage au conduit tubulaire secondaire correspondant (4).

6. Corps rayonnant selon l'une quelconque des revendications précédentes, dans lequel la partie partiellement hémisphérique (6) est logée, lors de l'utilisation, dans le conduit tubulaire principal (1) correspondant sur au moins un tiers du diamètre intérieur du conduit tubulaire principal (1).
